(19)

Europäisches
Patentamt

European
Patent Office

Office européen
des brevets

(11) EP 2 208 920 B1

(12) EUROPEAN PATENT SPECIFICATION

(45) Date of publication and mention
of the grant of the patent:
**22.02.2012 Bulletin 2012/08**

(51) Int Cl.:
*F16L 55/179* *(2006.01)*     *F16L 55/26* *(2006.01)*
*B29C 35/08* *(2006.01)*     *B29C 35/02* *(2006.01)*
*B29C 63/34* *(2006.01)*     *B29D 23/00* *(2006.01)*
*B29C 65/14* *(2006.01)*

(21) Application number: **09388015.1**

(22) Date of filing: **05.08.2009**

(54) **Method of sealing a pipeline and a sealing system**

Rohrleitungsabdichtungsverfahren und -system

Procédé d'étanchéité d'un pipeline et système d'étanchéité

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **05.08.2008 EP 08013988**

(43) Date of publication of application:
**21.07.2010 Bulletin 2010/29**

(73) Proprietor: **Per Aarsleff A/S
8230 Abyhoj (DK)**

(72) Inventors:
• **Moeskjaer, Ole
Viby J (DK)**
• **Rasmussen, Mogens Pagter
7442 Engesvang (DK)**
• **Rasmussen, Bent Sloth
6000 Kolding (DK)**

(74) Representative: **Nielsen, Henrik Sten et al
Budde Schou A/S
Vester Søgade 10
1601 Copenhagen V (DK)**

(56) References cited:
**EP-A- 0 275 924     US-A- 6 029 726**

**Description**

The present invention relates to a method and a system for sealing the transition of a branch pipe and a main pipe.

Pipelines are typically made of robust and heavy materials such as steel, concrete or rigid plastic. Exchanging existing pipelines is usually a very costly process, especially when the pipeline is located underground, such as e.g. sewage pipelines. To renovate a defect pipeline, such as a leaking sewage pipeline, an elongated liner may be inserted into the existing pipeline. The liner is made of a flexible and resin-impregnated material and shaped like a tube having approximately the same diameter as the pipe.

The liner is allowed to cure after being inserted into the pipeline. When cured, the liner will be robust, solid and fluid-tight. The inner surface of the liner will be very smooth, i.e have a low surface roughness. Due to the decreased roughness, the flow rate with the liner installed will typically be improved compared to the flow rate without liner, even if the liner reduces the effective flow area of the pipeline.

Eversion is the most common technology used for lining and re-lining existing pipelines. Eversion is made by fastening one end of the liner onto a manhole and subsequently inverting the liner into the pipeline by the use of water, steam or high-pressurized gas. UV light, visual light or hot water/steam is typically used to perform the subsequent curing of the liner. An advantageous technology for curing a liner has been described in the international patent application DK2008/000073, published as WO 2008/101499. The above mentioned patent application relates to an apparatus for curing a liner. The apparatus has a mobile and flexible "light train" having a set of LEDs (light emitting diodes), which are used to cure the liner.

A pipeline system typically comprises several pipeline intersections, forming main pipes and branch pipes. Branch pipes joining the main pipe constitute a major problem in connection with the above technology. A branch pipe may e.g. be used to connect a building to the pipeline system. A main pipe often has a plurality of branch pipes along its elongation. When lining the main pipe, the liner will block access to the branch pipe. Access to the branch pipe has to be re-established after curing the liner by cutting a hole in the liner at the position of the branch pipe junction. Such a hole constitutes a hole in the liner at the position of the branch pipe junction. Such a hole constitutes a void in the liner since the fluid-tight properties of the liner are compromised at the location of the hole. There is thus a significant risk of leakage at the location of the hole.

Several attempts have been made to reduce the risk of leakage. One such attempt has been described in US 6029726, which proposes a separate installation of a seal comprising a hat-shaped liner at the transition between the main pipe and the branch pipe. The seal is put in the correct place by an inflatable bladder, and a centrally located light source is used for curing.

It is therefore an object according to the present invention to provide a method and a system for inserting and curing a branch seal without to any substantial extent negatively affecting the main liner.

The above need and the above object together with numerous other, needs and objects which will be evident from the below detailed description are according to a first aspect of the present invention obtained by a method of applying a resin-impregnated seal onto a junction between a branch pipe and a main pipe, the seal comprising a tubular part defining a first opening and a second opening opposite the first opening and a brim portion attached to the tubular part at the first opening and extending radially outwardly from the tubular part, the method comprising:

providing a sealing apparatus including:

an elongated housing, the housing having an outer wall and defining a first end and an opposite second end and a longitudinal dimension between the first and second ends greater than the diameter of the branch pipe, the housing defining a maximum transversal dimension perpendicular to the longitudinal dimension smaller than the diameter of the main pipe, the housing having a first aperture through the outer wall at the first end and a second aperture through the outer wall located between the first end and the second end,
an inflatable ring structure fixated externally to the outer wall at the second aperture and circumferentially encircling the second aperture and having an integral radiant energy source for generating and irradiating radiant energy outwardly from the ring structure,
a flexible guiding tube having a length greater than the tubular part, the guiding tube having an open end and a closed end opposite the open end, the open end being fixated to the first aperture of the housing, and
a mobile radiant energy source for being inserted into the second aperture for generating and irradiating radiant energy outwardly, and by performing the following steps:

positioning the flexible guiding tube such that the closed end is located outside the housing,
positioning the brim portion of the seal juxtaposed the inflatable ring structure and having the tubular part extending through the inflatable ring structure and the second aperture of the housing and towards the first aperture of the housing and the closed end of the flexible guiding tube,

positioning the housing inside the main pipe such that the second aperture is positioned juxtaposed the branch pipe,

fixating the brim portion to the main pipe at the junction by pressurizing the inflatable ring structure,

inverting the seal such that the tubular part of the seal and the closed end of the flexible guiding tube extends into the branch pipe by the application of pressurized fluid from the first opening of the housing towards the second opening of the housing,

positioning the mobile radiant energy source inside the tubular part,

irradiating radiant energy from the integrated radiant energy source for curing the brim portion and

irradiating radiant energy from the mobile radiant energy source for curing the tubular part.

After the main pipe has been lined, cured and the hole for the branch pipe has been cut open, the edge of the hole may not have fluid-tight properties. Fluid, such as sewage water, may then enter the space between the liner and the wall of the pipeline. Since the pipeline wall may be defect, the fluid may eventually propagate to the outside environment, yielding an undesired leakage. By placing the hat-shaped seal in the junction between the main pipe and the branch pipe such leakage may be prevented. The tubular part of the seal having a diameter corresponding to the diameter of the branch pipe will stick to the inner surface of the branch pipe and yield a leakage-free transition between the branch pipe and the seal. Accordingly, the brim portion of the seal will stick to the inner surface of the main pipe, i.e. the previously installed liner, resulting in a leakage-free transition between the seal and the main pipe. The brim portion may preferably have a circular or elliptic shape and/or have an undulation corresponding to the inner surface of the main pipe. The branch pipe may be in its original state or alternatively the branch pipe may have been re-lined similar to the main pipe.

Manual application of the seal is normally not possible due to the limited space inside the pipeline. Preferably the seal is mounted on a housing, which is inserted into the pipeline. Care should be taken when inserting the seal into the pipeline. Excessive dirt on the seal may compromise the fluid-tightness of the seal. Therefore the best solution is to protect at least a substantial portion of the seal in the housing during insertion. Inverting the seal into the housing will efficiently protect the seal from any dirt or damage. The tubular part of the seal should be placed inside the housing between the second aperture and the first aperture.

The guiding tube is securely fastened to the first aperture and by applying pressurized gas, such as compressed air, the guiding tube is forced into the first aperture of the housing and further through the second aperture. The guiding tube will act on the tubular part of the seal and invert the seal into its original shape. The tubular part of the seal is thereby positioned between the guiding tube and the branch pipe. By applying a high gas pressure to the guiding tube, the tubular part of the seal will be efficiently sealed to the branch pipe by the force of the gas pressure.

The seal must be applied to the pipeline using a considerable fixation force to secure a fluid-tight transition and avoid any voids in the transition between the seal and the pipeline/liner. In this context it is important that the whole surface of the seal is securely fixated to the pipeline wall. This means an evenly distributed fixation force must be applied to the seal. The brim portion of the seal may be fixated to the main pipe by pressurizing an inflatable ring structure. The inflatable ring structure then fixates the brim in the correct position and applies an evenly distributed fixation force to the seal, thereby sealing it to the main pipe. The inflatable ring structure may be realized having many different shapes. The inflatable ring structure should at least have a shape corresponding to the brim portion, i.e. a circular/elliptic shape for when inflated to cover the full area of the brim portion. The inflatable ring structure may however have a shape considerably larger than the brim portion, even surrounding the housing completely. The inflatable ring structure may preferably comprise an airbag or similar, which may be independently inflated/deflated by the use of a pressure hose or the like.

When curing the seal by applying visual light or alternatively UV light, irradiating any part of already cured liner must be avoided. By placing the radiation sources in a very close proximity in relation to the brim, it can be secured that the radiant energy sources irradiate the brim but not any part of the already cured main liner. In some cases the already cured liner may be negatively affected by the radiation from the radiation sources.

A "light train" as described in Annex 1 may preferably cure the tubular part of the seal. The "light train" may enter and irradiate the branch pipe without irradiating any part of the already cured liner and brim portion of the seal.

According to a further feature of the method according to the present invention, the housing may include a guiding flange for allowing a smooth communication between the first aperture and the second aperture. Such a guiding flange will facilitate the inversion of the seal and the guiding tube by allowing for a smooth transition between the longitudinal direction and the transversal direction. This further prevents the guiding tube and/or the seal being transported in a false direction or become stuck. The guiding flange may simply comprise a curved metal plate inside the housing.

According to a further feature of the method according to the present invention, the outer wall of the housing may preferably comprise a mesh structure or alternatively a frame structure. A frame structure or mesh structure may be used in place of a continuous wall structure to save material and make the housing lighter, thereby simplifying the movement of the housing inside the pipe.

According to a further feature of the method according to the present invention the ring structure may comprise a continuous structure or alternatively a sectioned structure. Preferably a continuous ring is used for applying a constant force onto the whole brim. Alternatively, the ring may be replaced by a plurality of sections for allowing a distributed force onto the brim portion.

According to a further feature of the method according to the present invention the inflatable ring structure surrounds said housing. This way the pressure from the flexible ring structure will be evenly distributed on the inner surface of the main pipe, thus allowing a more stable positioning of the housing.

According to a further feature of the method according to the present invention the inflatable ring structure comprises 2 layers. This way the flexible ring structure may itself be completely airtight, and thus no sealing is required in relation to the housing.

According to a further feature of the method according to the present invention the inflatable ring structure is sealed to said housing by a fixation seal. Alternatively, the flexible ring structure may be sealed onto the housing.

According to a further feature of the method according to the present invention the integral radiant energy sources are mounted in a recessed position in relation to said housing. To protect the radiant energy sources from the pressure of the inflatable ring structure, the radiant energy sources may be recessed into the housing. Covering the recess with a transparent protective plate may additionally protect the radiant energy sources.

According to a further feature of the method according to the present invention, the integral radiant energy source and/or the mobile radiant energy source may comprise a LED. One or several LEDs may preferably be used as radiant energy sources. Due to the low thermal losses of LEDs, the risk of thermal energy heating of the already cured main liner is low. The type of radiation emitted by the LEDs may preferably be visible light, however alternatively infrared or ultraviolet light may be used.

According to a further feature of the method according to the present invention, the housing may include a rope, wire or a chain for transporting the housing inside the main pipe. The sealing apparatus is placed in the main pipe via the manhole. Subsequently a rope may be used to drag it to the proper position juxtaposed the branch pipe.

According to a further feature of the method according to the present invention, the housing is transported inside the main pipe by a robot grabbing the housing, or alternatively by a rope, a wire or a chain attached to the housing, or alternatively by a motor attached to the housing. A mobile robot, preferably remote controlled, may be employed to grab the housing at its front end and position the housing at the branch pipe. Alternatively, the housing has a rope, wire or chain attached for manual positioning. Yet another alternative is to use a motor. The motor may be e.g. a pneumatic motor, an electrical motor or petrol driven motor. The motor may further be connected to driving wheels or the like mounted onto the housing. The remove control device may e.g. comprise a cable control device or a radio control device.

According to a further feature of the method according to the present invention, the housing includes a digital camera and a communication device. Adding a digital camera and the corresponding communication device for transmitting the digital pictures to a computer monitor located outside the pipe system will give the operator an opportunity to check and adjust the position of the sealing apparatus by consulting the digital picture.

According to a further feature of the method according to the present invention, the guiding tube is made of reinforced polymer material. A reinforced polymer material is preferably used for the guiding tube to give the polymer material sufficient strength to withstand high pressures and apply a sufficient fixation pressure onto the seal and at the same time retain the flexibility of the material. Such reinforced polymer material may be e.g. Kevlar or the like.

According to a further feature of the method according to the present invention, the mobile radiant energy source includes a rope, wire or a chain for transporting the mobile radiant energy source inside the main pipe and the branch pipe, or alternatively the mobile radiant energy source is mounted to a flexible rod for transporting the mobile radiant energy source inside the main pipe and the branch pipe, or alternatively the mobile radiant energy source includes a motor and a remote control device for transporting the mobile radiant energy source inside the main pipe and the branch pipe, or alternatively the mobile radiant energy source is mounted via an actuator on the housing. The mobile radiant energy source is preferably inserted into the tubular part of the seal from the outside via the first and second aperture of the housing. Preferably this is done after curing the brim portion. The mobile radiant energy force may preferably be similar to the apparatus described in Annex 1. Further, the radiant energy source may have wheels or skids or the like for easy movement inside the main pipe and branch pipe. Alternatively, a flexible rod is used to move the mobile radiant energy source from the outside, e.g. through a manhole or the like. The flexible rod may be long enough to operate the mobile radiant energy source from the outside of the pipeline and is preferably made of fibre material. Alternatively, the mobile energy source is stored inside or on the housing and pushed into the branch pipe by an actuator when curing the tubular part. The actuator may be a linear motor or a pneumatic actuator or the like.

According to a further feature of the method according to the present invention, the rope communicates with the closed end of the flexible guiding tube via a pulley. Having a pulley attached to the closed end of the flexible guiding tube and the rope running through the pulley will simplify the insertion of the mobile radiant energy source and make it more controllable from the outside of the pipe system.

According to a further feature of the method according to the present invention a compressor and/or vacuum pump is provided for inflating and/or deflating the flexible guiding tube and/or the inflatable ring structure. The compressor/vacuum pump should be controllable from the outside of the pipesystem.

According to a further feature of the method according to the present invention, the tubular part of the seal has a slightly smaller diameter than the diameter of the branch pipe. A tight-fitting seal is important to secure fluid-tightness in relation to the branch pipe.

According to a further feature of the method according to the present invention, the brim portion is undulated and where the undulation approximately corresponds to the undulation of the main pipe. An undulated brim portion will fit better into the main pipe than will a flat brim portion.

According to a further feature of the method according to the present invention, the method further comprises the steps of positioning a liner in the main pipe and cutting a hole in the liner for accessing the branch pipe before performing the steps according to the first aspect of the present invention, or alternatively after performing the steps according to the first aspect of the present invention. Preferably, the main pipe is already lined before applying the seal. Alternatively, the seal may be applied before lining the main pipe. In this case care should be taken not to damage the seal in any way when cutting open the access to the branch pipe. Yet another alternative is applying the seal without applying a liner at all. This may be useful for sealing a leaking junction between a main pipe and a branch pipe, where it is not desired to apply a liner to the whole main pipe.

According to a further feature of the method according to the present invention, the method further comprises the steps of positioning a liner in the branch pipe before performing the steps according to the first aspect of the present invention, or alternatively after performing the steps according to the first aspect of the present invention. The branch pipe may as well be lined before applying the seal. Alternatively, the branch pipe may be lined after applying the seal. In both cases, the branch pipe liner should be cut such that it does not extend into the main pipe.

From the above it is further evident that both the main pipe and the branch pipe may be lined either before or after applying the seal.

According to a further feature of the method according to the present invention said elongated housing may comprise an inner duct having an outer diameter smaller than the inner diameter of said elongated housing, said inner duct having a first orifice located at said first aperture and a second orifice located at said second aperture and where said flexible guiding tube is fixated to said first orifice and said inflatable ring structure is fixated to said second orifice.

The inner duct and the inflatable ring structure are preferably made of disposable materials, which may be separated from the tool and disposed independently of the rest of the tool when they have reached the end of their useful life. The housing and the light sources have a significantly longer lifetime than he airbag and the guiding tube. Therefore it is an advantage if they are separately disposable and replaceable. The inner duct simplifies the exchange of the flexible ring structure. The inner duct and the inflatable ring structure may be of the same material, such as flexible PVC plastics. Alternatively, the inner duct may be of a substantially rigid material and the inflatable ring structure of substantially elastic material.

According to a further feature of the method according to the present invention the integrated radiant energy sources may be mounted on said housing. By mounting the radiant energy sources on the housing, the radiant energy sources may be cooled by transferring heat energy to the housing. This is best achieved if the housing is made of metal.

The above need and the above object together with numerous other needs and objects which will be evident from the below detailed description are according to a second aspect of the present invention obtained by a system for applying a resin-impregnated seal onto a junction between a branch pipe and a main pipe, the seal comprising a tubular part defining a first opening and a second opening opposite the first opening and a brim portion attached to the tubular part at the first opening and extending radially outwardly from the tubular part, the system comprising a sealing apparatus including

an elongated housing, the housing having an outer wall and defining a first end and an opposite second end and a longitudinal dimension between the first and second ends greater than the diameter of the branch pipe, the housing defining a maximum transversal dimension perpendicular to the longitudinal dimension smaller than the diameter of the main pipe, the housing having a first aperture through the outer wall at the first end and a second aperture through the outer wall located between the first end and the second end,

an inflatable ring structure fixated externally to the outer wall at the second aperture and circumferentially encircling the second aperture and having an integral radiant energy source for generating and irradiating radiant energy outwardly from the ring structure,

a flexible guiding tube having a length greater than the tubular part, the guiding tube having an open end and a closed end opposite the open end, the open end being fixated to the first aperture of the housing,

a mobile radiant energy source for being inserted into the second aperture for generating and irradiating radiant energy outwardly.

The above system may preferably be used together with the previously mentioned methods. For the housing to fit in the main pipe and achieve a stable position the diameter of the housing should be slightly less than the diameter of the main pipe. By pressurizing the inflatable ring, which may comprise an airbag, the housing will be securely fixated inside the main pipe. The length of the housing should at least be longer than the diameter of the branch pipe.

The radius of the tubular part of the seal should correspond to the inner radius of the lateral pipe. The specific angle should correspond to the angle between the main pipe and the lateral pipe. The undulation of the brim portion of the seal should be made to correspond to the undulaton of the main pipe.

Preferably the light sources comprise LEDs. LEDs are very durable and have a long lifetime, thereby substantially eliminating curing faults due to light source failure or insufficient light source capacity.

The flexible guiding tube may be of thin non-adhesive plastic material. The guiding tube should guide the resin-impregnated seal but at the same time the seal may not stick onto the guiding tube. Also the inflatable ring structure must be non-adhesive to avoid it sticking to the seal. A non-adhesive coating may alternatively be used to coat the flexible guiding tube and the inflatable ring.

The mobile radiant energy source may preferably be attached to the guiding tube to be able to be inserted and retracted from the outside of the pipe system by a rope or the like.

It is evident that numerous variations of the system and method described above may be realized.

The invention is now to be further described with reference to the drawings, in which:

Figure 1 is an exploded perspective view of a sealing apparatus of a currently preferred embodiment according to the present invention,

Figure 2a-f is a series of cut-out perspective views illustrating the technique of mounting the seal to the sealing apparatus, the accommodation of the seal at the main pipe-branch pipe junction and the technique of light curing the brim portion and the tubular part of the seal.

Figures 3, 4, 5 and 6 are alternative embodiments of the sealing apparatus.

A detailed description of the figures of a presently preferred embodiment of the invention follows below.

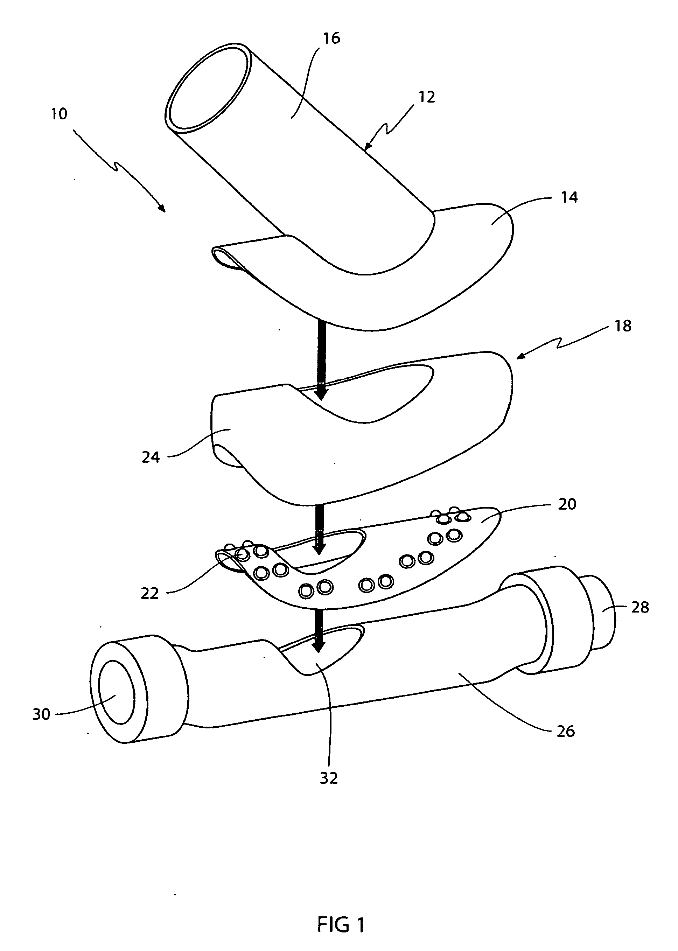

Fig. 1 shows a perspective view of a first embodiment of a sealing apparatus 10 including a seal 12 according to the present invention. The seal 12 is preferably made of a relatively thin and flexible glass fibre material impregnated with a resin. Alternatively, a resin-impregnated felt material may be used. The resin should be a polymeric resin irreversibly curable by radiant energy such as e.g. visible light. The seal 12 comprises a circular brim portion 14 and a tubular part 16. The brim portion 14 is attached to one end of the tubular part 16 and extends outwards. The tubular part 16 is preferably made of one rectangular piece of glass fibre material or felt material by stitching together two opposing edges. The brim portion 14 is preferably made from one circular piece of glass fibre material or felt material by defining a centrally located, substantially circular hole. One edge of the tubular part 16 may then be stitched onto the edge of the hole such that the tubular part 16 extends in a specific angle and a specific distance from the brim portion 14. The brim portion 16 may have a specific undulation. The specific measurements such as length and diameter of the tubular part 16 and diameter and undulation of the brim portion 14 are chosen in accordance with the measurements of the particular pipelines to be sealed.

The brim portion 14 is placed juxtaposed to an inflatable airbag 18 having a ring shape. The airbag 18 comprises a tensile part 24 having a circular shape being non-adhesive and flexible and defining a centrally located hole corresponding to the brim portion 14. The airbag 18 further comprises a substantially rigid part 20 having a circular shape defining a centrally located hole. The tensile part 24 and the rigid part 20 are bonded together at their respective inner and outer edges forming the airbag 18. The tensile part 24 should be made of a durable, heat insensitive and radiation permeable material, preferably a polymer such as silicon rubber. The rigid part 20 may be any kind of rigid and robust material, however, preferably metal is used. The rigid part 20 is fitted with a plurality of light sources 22, preferably light emitting diodes, LEDs. Metal is preferably used in the rigid part 20 due to the high heat conductivity of metal. A material with high heat conductivity will help transporting heat from the light sources 22, thereby cooling the light sources 22. The rigid part 20 should have a properly sealed connection (not shown) to power the light sources 22 and an inlet/outlet (not shown) for pressurized air to inflate/deflate the airbag: The light sources 22 are designed to project visible light (300-600 nm) through the tensile part 24 onto the brim portion 14. The light sources 22 may preferably have a transparent cover to protect them from shocks. The rigid part 20 is firmly attached onto a tool 26. The tool 26 is elongated and extends between a first opening 28 and a second opening 30 and has a cylindrical surface defining a central hole 32 for access into the interior of the tool 26. The central hole 32 corresponds to the hole defined by the rigid part 20 and is located approximately at equal distance from the first and second opening 28, 30 of the tool 26. The tool 26 may preferably be made of metal, such as e.g. aluminium. A pressure hose (not shown) may be attached to the first opening 28 for applying a high pressure to the interior of the tool 26. Preferably the pressure hose (not shown) also includes electrical and pneumatic cables for pressurizing the airbag 18 and powering the light sources 22.

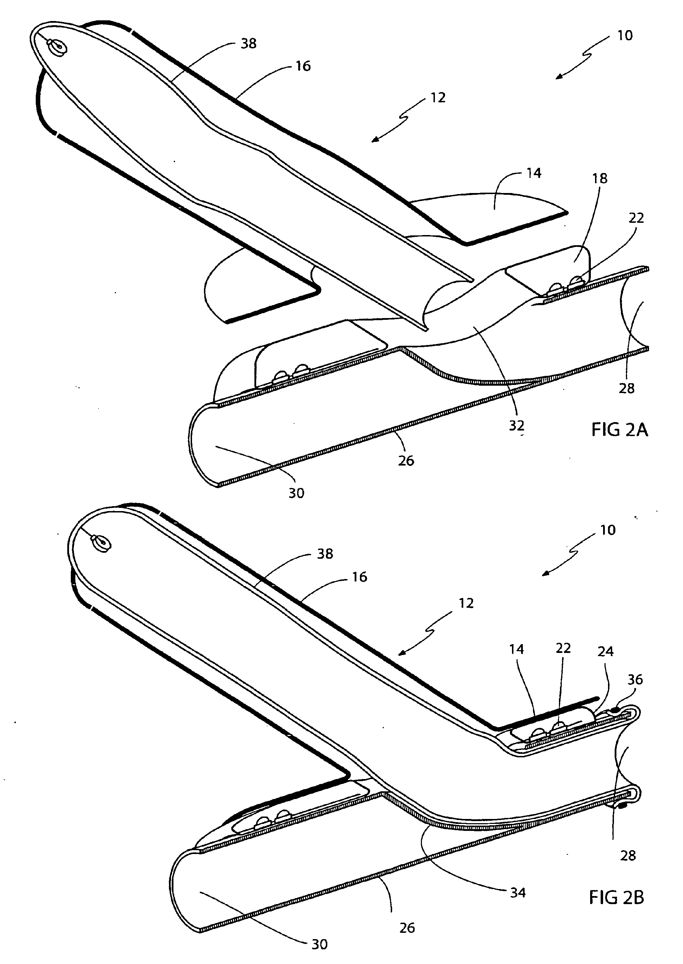

Fig. 2a shows a cut-out perspective view of the sealing apparatus 10 including the seal 12 and the guiding tube 38 during mounting. The guiding tube 38 is made of thin and flexible plastic material such as PVC and has a long tubular shape with one closed end and one opposite open end. The closed end may optionally have a plug and/or venting holes for pressure regulation. The surface of the guiding tube 38 should have non-adhesive properties. The open end of the guiding tube 38 fits through the tubular part 16 and may be guided further through the central hole 32 of the tool 26. The interior of the tool 26 comprises a guiding flange 34 connecting the central hole 32 to the first opening 28, thereby blocking access from the second distant hole 30 to any of the central holes 32 and first openings 28. The flange 34 is shaped such as to form a smooth transition between the substantially axial normal direction of the first opening 28 and the substantially radial normal direction of the central hole 32.

Fig. 2b shows a cut-out perspective view of the sealing apparatus 10 having an installed seal 12 and guiding tube 38. The brim portion 14 is in contact with a substantial part of the tensile part 24 of the airbag 18. The open end of the guiding tube 34 is located inside the tubular part 16 of the seal 12. The open end of the guiding tube 38 is fastened onto the first opening 28 of the tool 26 by a rubber band 36.

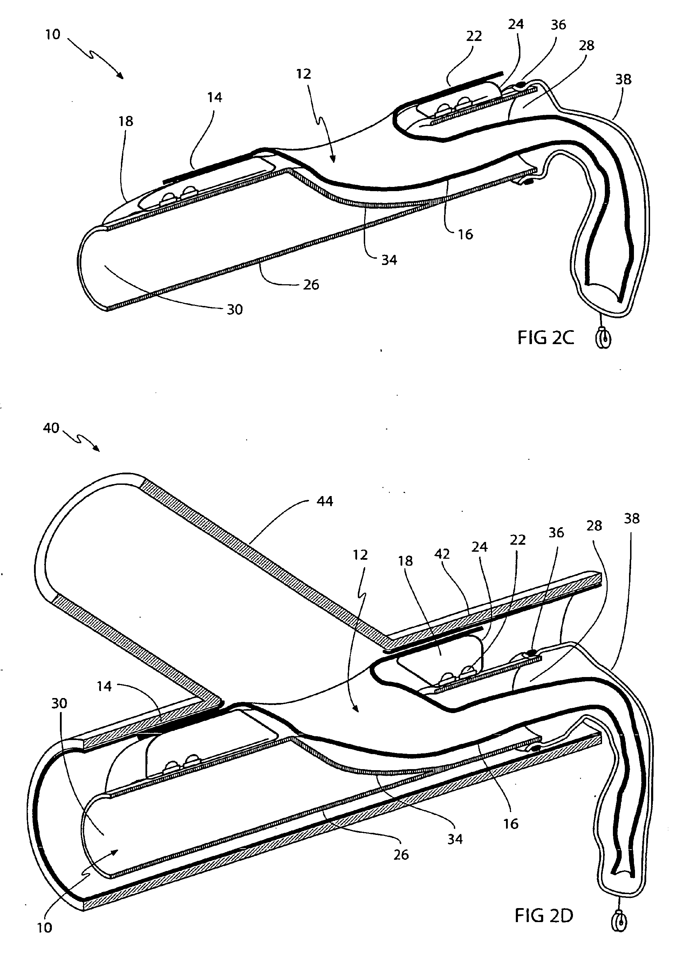

Fig. 2c shows a cut-out perspective view of the sealing apparatus 10 ready to be inserted into a main pipe (not shown). The tubular part 16 of the seal 12 and the guiding tube 38 have been inverted and are reaching into the tool 26 and partly through the first opening 28.

Fig. 2d shows a cut-out perspective view of the sealing apparatus 10 including the tool 26 inside a pipe system 40 before inversion. The sealing apparatus 10 may preferably be positioned inside the pipe system 40 by using a robot (not shown) attached to the tool 26. The pipe system 40 comprises a main pipe 42 and a branch pipe 44 connecting to the main pipe 42 at a junction and extending in a specific angle from the main pipe 42. The main pipe 42 is re-lined with a liner 46, except at the junction to the branch pipe 44, where a hole has been cut. The tool 26 is placed inside the main pipe 42 in a position such that the brim portion 14 is located around the junction between the branch pipe 44 and the main pipe 42. The tool 26 may be moved to the proper position by the use of a robot (not shown). By pressurizing the airbag 18, the tensile part 24 will inflate and apply a pressure onto the brim portion 14 such that the brim portion 14 is fixated between the tool 26 and the main pipe 42.

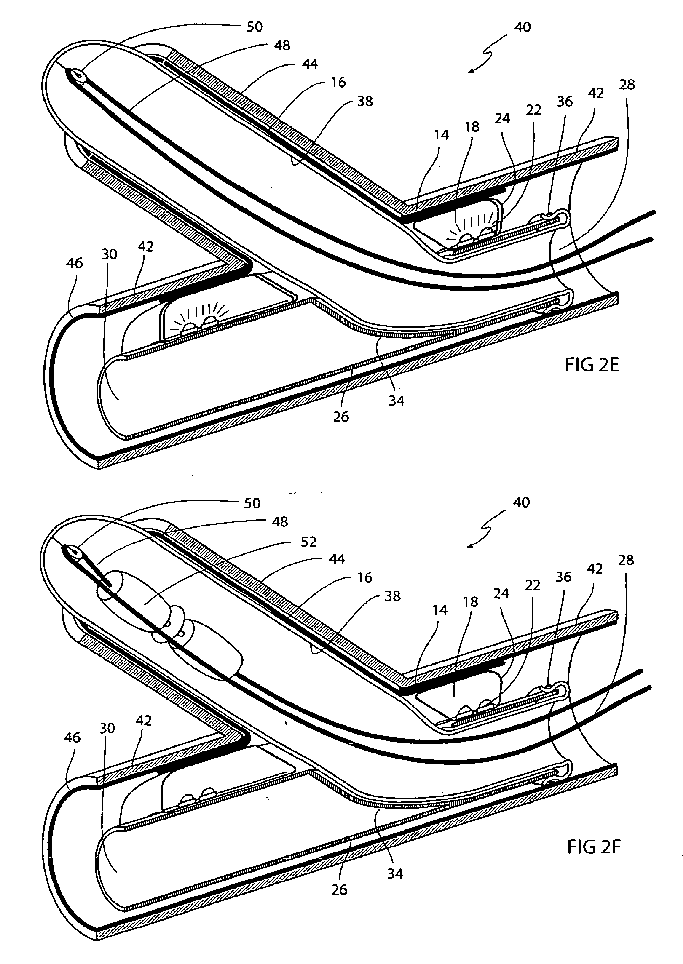

Fig. 2e shows a cut-out perspective view of the sealing apparatus 10 inside a pipe system 40 after inversion. Inversion may be performed by applying a high-pressurized gas flow against the first opening 28 in direction towards the second opening 30. The gas flow may be applied by using the previously mentioned pressure hose (not shown). As a result of the gas flow, the guiding tube 38 will invert into the branch pipe 44. The tubular part 16 of the seal 12, being directed by the guiding tube 38, will as well invert into the branch pipe 44. The gas pressure will act on the guiding tube 38 and additionally provide a uniform fixation force pressing the tubular part 16 to the branch pipe 44.

For achieving a better fixation of the seal 12 at the transition between the brim portion 14 and the tubular part 16 the airbag 18 may have a flap (not shown), which extends slightly into the tubular part 16 when the airbag 18 is pressurized. The flap (not shown) of the airbag 18 will apply a fixation force to the tubular part 16 near the transition between the brim potion 14 and the tubular part 16. Preferably, the flap (not shown) of the airbag 18 is rounded off to achieve a smooth transition between the brim portion 14 and the tubular part 16. A smooth transition will reduce the flow resistance around the branch pipe 44.

By activating the LEDs 22, the brim portion 14 of the seal 12 is cured and sealed to the main pipe 42. The closed end of the guiding tube 38 has a pulley 50 with a rope 48 attached. The rope 48 reaches to the outside of the pipe system and is used in the next figure to pull a light train (not shown here) into the tubular part 16 of the seal 12.

Fig 2f shows a cut-out perspective view of the sealing apparatus 10 inside a pipe system 40 after inversion. The tubular part 16 is cured and sealed onto the lateral branch pipe 44 by pulling a light train 52 into the lateral branch pipe 44. The light train 52 is attached to the rope 48 and may irradiate the branch pipe 16. As a result, the junction between the main pipe 42 and the lateral branch pipe 44 is sealed.

The light train 52 should have a circumference slightly smaller than the circumference of the branch pipe. The light sources in the light train 52 are preferably LEDs mounted such as to irradiate the tubular part 16.

When the curing is finished, the light train 52 may be removed, the airbag 18 may be depressurized and the tool 26 including the guiding tube 38 may be withdrawn from the pipe system 40 to the outside of the pipe system.

When the tool 26 has been removed from the pipe system, the main pipe 42 has the brim portion 14 of the sea! 12 securely attached onto the liner 46. The tabular part 16 of the seal 12 extends into the branch pipe 44 and is securely fixated.

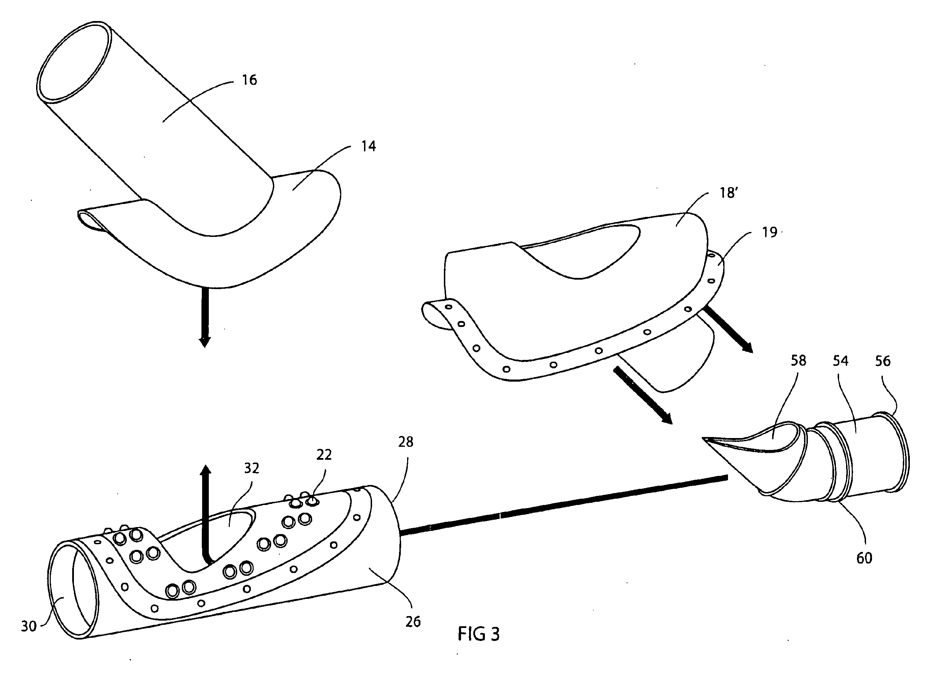

Figure 3 shows a perspective view of a second embodiment of a sealing apparatus 10 including a seal 12 according to the present invention. The second embodiment comprises all the features of the first embodiment and additionally comprises an inner duct 54 having an outer diameter slightly smaller than the inner diameter of the tool 26. The inner duct has a longitudinal opening 56 and a transversal opening 58. The inner duct 54 is placed inside the tool 26 and is used for fixating the airbag 18'. The inner duct 54 is inserted into the first opening 28 such that the inner duct 54 extends between the first opening 28 and the central hole 32. The inner duct 54 thus provides a smooth transition between the first opening 28 and the central hole 32. The first opening 28 will thus correspond to the longitudinal opening 56 and the central hole 32 to the transversal opening 58. The airbag 18' may be fixated to the transversal opening 58. At least one sealing flange 60 fixates the inner duct 54 to the inner wall of the tool 26 near the first opening 28. The sealing flange 60 should be pressure-tight to allow the airbag 18' to inflate independent of the guiding tube 38 (not shown). The airbag 18' is fixated airtight to the outer surface of the tool 26 by a fixation band 19. The fixation band 19 may be of rubber material and may be fixated to the tool 26 by the use of e.g. an adhesive or alternatively screws. The airbag 18' is further used for protecting the light sources 22.

In the second embodiment the light sources 22 are fastened directly on the outer surface of the tool 26, thereby eliminating the rigid part 20 of the first embodiment. Since the tool 26 is made of a relatively large amount of metal, the tool 26 will help remove and store residual heat emitted from the light sources 22. Placing the light sources 22 directly on the tool 26 will thus help cool the light sources 22.

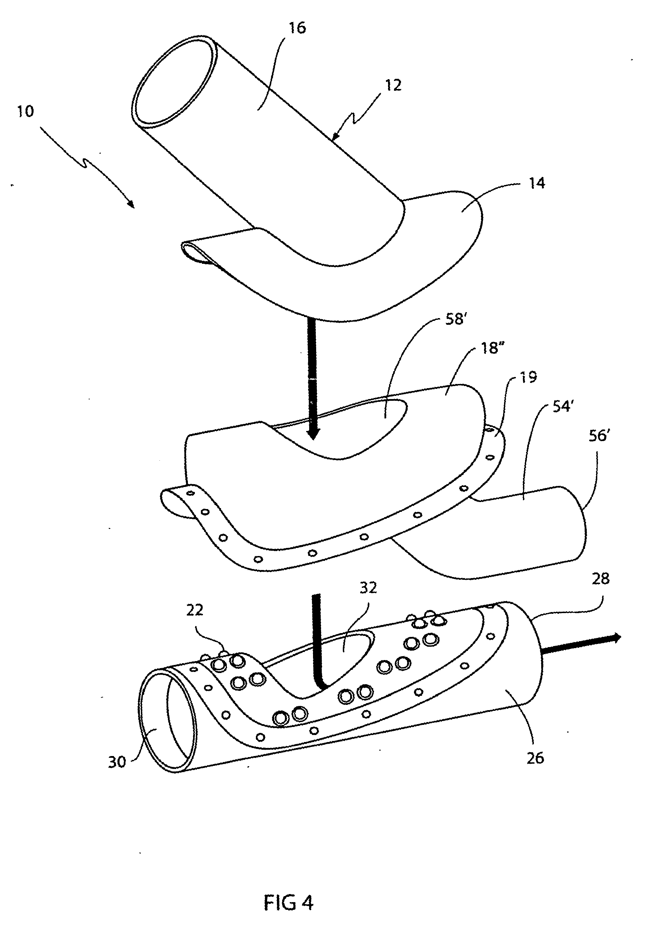

Figure 4 shows a perspective view of a third embodiment of a sealing apparatus 10" including a seal 12 according to the present invention. The third embodiment comprises all the features of the second embodiment and describes an alternative realization of the airbag 18" and the inner duct 54'. The airbag 18" and the inner duct 54' form a single component and may be constructed using the same material, preferably moulded PVC plastic material. The inner duct 54' is fixated airtight to the tool 26 at the second opening 30.

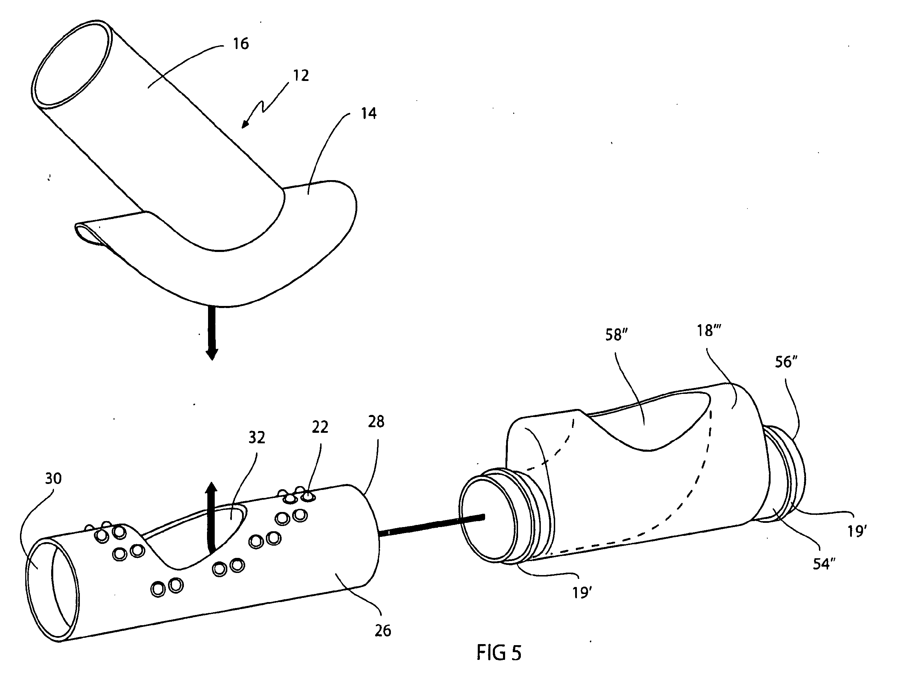

Figure 5 shows a perspective view of a fourth embodiment of a sealing apparatus 10''' including a seal 12 according to the present invention. The fourth embodiment comprises all the features of the third embodiment and describes an alternative realization of the airbag 18'''. The alternative realization of the airbag 18''' comprises a tensile and tubular structure surrounding the tool 26, except at the central hole 32. The airbag 18''' is fixated airtight to the outer surface of the tool 26 by two fixation bands 19', where one fixation band 19' is located near the first opening 28 and another fixation band 19' is located near the second opening 30. The fixation band 19' may preferably comprise a rubber band.

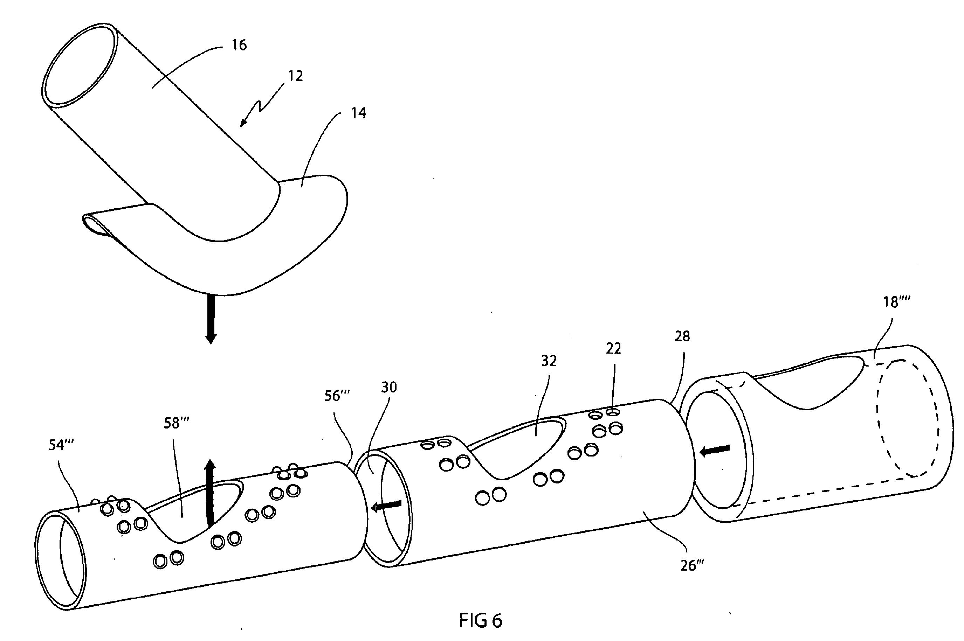

Figure 6 shows a perspective view of a fifth embodiment of a sealing apparatus 10'''' including a seal 12 according to the present invention. The fifth embodiment comprises all the features of the fourth embodiment and describes an alternative realization of the airbag 18'''' and the inner duct 54'''. The airbag 18'''' is made having a double layer and surrounding the tool 26, except at the central hole 32. The airbag 18'''' is thus intrinsically airtight and there is no need for additional sealing elements. The inner duct 54''' is preferably made of metal and has the light sources 22 attached on its outer surface. The tool 26 surrounds the inner duct and defines holes 21 for the light sources to irradiate through. Thereby the light sources are protected from the pressure of the airbag 18 and of any shocks from the outside. The holes may be covered with a transparent cover, such as a Plexiglas plate or the like, for additional protection of the light sources 22. The airbag 18'''' forms a separate unit surrounding the tool 26''''. The airbag 18'''' is made airtight and comprises two layers. The inner duct 54''' may preferably have a guiding flange 34 (not shown) providing a connection between the first opening 28 and the central hole 32.

The pressure acting on the tool 26 and thereby the light source 22 when the airbag 18 is inflated may apply a considerable force to the light source 22. The tool 26 should be made of metal and will consequently have a high structural strength. The light source 22, which is preferably made of LEDs, has a limited structural strength. A numerical example of the force, which may apply on the LEDs follows below:

The area of the brim portion 14 (ellipse of width 30 cm and length 35 cm, pipe diameter 10 cm) may be calculated as follows:

$$A_{brim} = \pi \cdot \frac{35}{2} \cdot \frac{30}{2} - \pi \cdot \frac{10}{2} \cdot \frac{14}{2} \approx 700 cm^2 = 0.07 m^2$$

Thus, having $10^5$ Pa pressure in the airbag 18 yields a force on the light source 22 of 7kN, which will not be tolerated by the LEDs. Thus, there is an obvious need for protecting the LEDs

The following is a list of parts with reference to the figures. Single or multiple prim (') signs are used in the description and in the figures to denote an alternative realization of the same part.

    10.    Sealing apparatus
    12.    Seal
    14.    Brim portion
    16.    Tubular part
    18.    Airbag
    19.    Fixation band
    20.    Rigid part
    21.    Hole
    22.    Light source
    24.    Tensile part

26. Tool
28. First opening
29. Pressure hose
30. Second opening
32. Central hole
34. Flange
36. Rubber band
38. Guiding tube
40. Pipe system
42. Main pipe
44. Branch pipe
46. Liner
48. Rope
50. Pulley
52. Light train
54. Inner duct
56. Longitudinal opening
58. Transversal opening
60. Sealing flange

**Claims**

1. A method of applying a resin impregnated seal (12) onto a junction between a branch pipe (44) and a main pipe (42), said seal (12) comprising a tubular part (16) defining a first opening and a second opening opposite said first opening and a brim portion (14) attached to said tubular part (16) at said first opening and extending radially outwardly from said tubular part (16), said method comprising:

    providing a sealing apparatus (10) including:

        an elongated housing (26), said housing (26) having an outer wall and defining a first end (28) and an opposite second end (30) and a longitudinal dimension between said first and second ends greater than the diameter of said branch pipe (44), said housing (26) defining a maximum transversal dimension perpendicular to said longitudinal dimension smaller than the diameter of said main pipe (42), said housing (26) having a first aperture through said outer wall at said first end (28) and a second aperture (32) through said outer wall located between said first end (28) and said second end (30),
        an inflatable ring structure (18) fixated externally to said outer wall at said second aperture (32) and circumferentially encircling said second aperture (32) and having an integral radiant energy source (22) for generating and irradiating radiant energy outwardly from said ring structure (18),
        a flexible guiding tube (38) having a length greater than said tubular part (16), said guiding tube (38) having an open end and a closed end opposite said open end, said open end being fixated to said first aperture of said housing (26), and
        a mobile radiant energy source (52) for being inserted into said second aperture (32) for generating and irradiating radiant energy outwardly, and by performing the following steps:

            positioning said flexible guiding tube (38) such that said closed end is located outside said housing (26),
            positioning said brim portion (14) of said seal (12) juxtaposed said inflatable ring structure (18) and having said tubular part (16) extending through said inflatable ring structure (18) and said second aperture (32) of said housing (26) and towards said first aperture of said housing (26) and said closed end of said flexible guiding tube (38),
            positioning said housing (26) inside said main pipe (42) such that said second aperture (32) is positioned juxtaposed said branch pipe (44),
            fixating said brim portion (14) to said main pipe (42) at said junction by pressurizing said inflatable ring structure (18),
            inverting said seal (12) such that said tubular part (16) of said seal (12) and said closed end of said flexible guiding tube (18) extend into said branch pipe (44) by the application of pressurized fluid from said first opening of said housing (26) towards said second opening of said housing (26),
            positioning said mobile radiant energy source (52) inside said tubular part (16),

irradiating radiant energy from said integrated radiant energy source (22) for curing said brim portion (14) and

irradiating radiant energy from said mobile radiant energy source (52) for curing said tubular part (16).

2. The method according to claim 1, wherein said housing (26) includes a guiding flange (34) for allowing a smooth communication between said first aperture and said second aperture (32).

3. The method according to any of the previous claims, wherein said outer wall of said housing (26) preferably comprises a mesh structure or alternatively a frame structure.

4. The method according to any of the previous claims, wherein said inflatable ring structure (18) comprises a continuous structure or alternatively a sectioned structure.

5. The method according to any of the previous claims, wherein said inflatable ring structure (18) surrounds said housing (26).

6. The method according to any of the previous claims, wherein said inflatable ring structure (18) comprises 2 layer,

7. The method according to any of the previous claims, wherein said inflatable ring structure (18) is sealed to said housing (26) by a fixation seal (12).

8. The method according to any of the previous claims, wherein said integrated radiant energy source (22) and/or said mobile radiant energy source (52) comprise a LED.

9. The method according to any of the previous claims, wherein said integral radiant energy sources (22) are mounted in a recessed position in relation to the outer circumference of said housing (26).

10. The method according to any of the previous claims, wherein said housing (26) is transported inside said main pipe (42) by a robot grabbing said housing (26), or alternatively by a rope, a wire or a chain attached to said housing (26), or alternatively by a motor attached to said housing (26).

11. The method according to any of the previous claims, wherein said housing (26) includes a digital camera and a communication device.

12. The method according to any of the previous claims, wherein said guiding tube (38) is made of reinforced polymer material.

13. The method according to any of the previous claims, wherein said mobile radiant energy source (52) includes a rope, wire or a chain for transporting said mobile radiant energy source (52) inside said main pipe (42) and said branch pipe (44), or alternatively the mobile radiant energy source (52) is mounted to a flexible rod for transporting said mobile radiant energy source (52) inside said main pipe (42) and said branch pipe (44), or alternatively said mobile radiant energy source (52) includes a motor and a remote control device for transporting said mobile radiant energy source (52) inside said main pipe (42) and said branch pipe (44), or alternatively the mobile radiant energy source (52) is mounted via an actuator on the housing (26).

14. The method according to claim 13, wherein said rope communicates with said closed end of said flexible guiding tube (38) via a pulley (50).

15. The method according to any of the previous claims, further providing a compressor and/or vacuum pump for inflating and/or deflating said flexible guiding tube (38) and/or said inflatable ring structure (18).

16. The method according to any of the previous claims, wherein said tubular part (16) of the seal (12) has a slightly smaller diameter than the diameter of the branch pipe (44).

17. The method according to any of the previous claims, wherein said brim portion (14) is undulated and where said undulation approximately corresponds to the undulation of said main pipe (42).

18. The method according to any of the previous claims, further comprising the steps of positioning a liner in said main pipe (42) and cutting a hole in said liner for accessing said branch pipe (44) before performing the steps according to claim 1, or alternatively after performing the steps according to claim 1.

19. The method according to any of the previous claims, further comprising the steps of positioning a liner in said branch pipe (44) before performing the steps according to claim 1, or alternatively after performing the steps according to claim 1.

20. The method according to any of the previous claims, wherein said elongated housing (26) comprises an inner duct (54) having an outer diameter smaller than the inner diameter of said elongated housing (26), said inner duct having a first orifice (56) located as said first aperture and a second orifice (58) located at said second aperture (32) and where said flexible guiding tube (38) is fixated to said first orifice (56) and said inflatable ring structure (18) is fixated to said second orifice (58).

21. The method according to any of the previous claims, wherein said integral radiant energy source (22) is fixated to said housing (26)

22. A system for applying a resin-impregnated seal (12) onto a junction between a branch pipe (44) and a main pipe (42), said seal (12) comprising a tubular part (16) defining a first opening and a second opening opposite said first opening and a brim portion (14) attached to said tubular part (16) at said first opening and extending radially outwardly from said tubular part (16), said system comprising a sealing apparatus (10) including
an elongated housing (26), said housing (26) having an outer wall and defining a first end (28) and an opposite second end (30) and a longitudinal dimension between said first and second ends greater than the diameter of the branch pipe (44), said housing (26) defining a maximum transversal dimension perpendicular to said longitudinal dimension smaller than the diameter of said main pipe (42), said housing (26) having a first aperture through said outer wall at said first end (28) and a second aperture (32) through said outer wall located between said first end (28) and said second end (30),
an inflatable ring structure (18) fixated externally to said outer wall at said second aperture (32) and circumferentially encircling said second aperture (32) and having an integral radiant energy source (22) for generating and irradiating radiant energy outwardly from said ring structure (18),
a flexible guiding tube (38) having a length greater than said tubular part (16), said guiding tube (38) having an open end and a closed end opposite said open end, said open end being fixated to said first aperture of said housing (26),
a mobile radiant energy source (52) for being inserted into said second aperture (32) for generating and irradiating radiant energy outwardly.

**Patentansprüche**

1. Verfahren zum Anbringen einer mit Harz imprägnierten Abdichtung (12) auf einer Anschlussstelle zwischen einer Abzweigrohrleitung (44) und einer Hauptrohrleitung (42), welche Abdichtung (12) einen rohrförmigen Teil (16) umfasst, der eine erste Öffnung und eine der ersten Öffnung gegenüberliegende zweite Öffnung definiert, und einen an der ersten Öffnung des rohrförmigen Teils (16) befestigten Randteil (14), der sich vom rohrförmigen Teil (16) radial nach aussen erstreckt, welches Verfahren folgendes umfasst:

Bereitstellung eines Abdichtungsapparats (10) enthaltend,
ein längliches Gehäuse (26), welches Gehäuse (26) eine Aussenwand aufweist und ein erstes Ende (28) und ein gegenüberliegendes zweites Ende (30) definiert sowie eine longitudinale Ausdehnung zwischen dem ersten und zweiten Ende, die grösser als der Durchmesser der Abzweigrohrleitung (44) ist, welches Gehäuse (26) rechtwinklig zur longitudinalen Ausdehnung eine maximale transversale Ausdehnung aufweist, die kleiner als der Durchmesser der Hauptrohrleitung (42) ist, welches Gehäuse (26) am ersten Ende (28) eine erste Öffnung durch die Aussenwand und eine zwischen dem ersten Ende (28) und dem zweiten Ende (30) beliegende zweite Öffnung (32) durch die Aussenwand aufweist,
eine aufblasbare Ringanordnung (18), die an der zweiten Öffnung (32) aussen an der Aussenwand befestigt wird und den Umfang der zweiten Öffnung (32) umrandet sowie eine integrierte Strahlungsenergiequelle (22) aufweist zur Erzeugung und Ausstrahlung von Strahlungsenergie von der Ringanordnung (18) nach aussen,
ein biegbares Führungsrohr (38) von grösserer Länge als der rohrförmige Teil (16), welches Führungsrohr (38) ein offenes Ende und ein dem offenen Ende gegenüberliegendes geschlossenes Ende aufweist, welches offene Ende an der ersten Öffnung des Gehäuses (26) befestigt wird, und
eine mobile Strahlungsenergiequelle (52) zum Einführen in die zweite Öffnung (32) zur Erzeugung und Ausstrahlung von Strahlungsenergie nach aussen, und

durch Ausführung folgender Schritte.

Positionierung des biegbaren Führungsrohrs (38) solchermassen, dass sich das geschlossene Ende ausserhalb des Gehäuses (26) befindet,
Positionierung des Randteils (14) der Abdichtung (12) Seite an Seite mit der aufblasbaren Ringanordnung (18), wobei sich der rohrförmige Teil (16) durch die aufblasbare Ringanordnung (18) und die zweite Öffnung (32) des Gehäuses (26) erstreckt und in Richtung der ersten Öffnung des Gehäuses (26) und des geschlossenen Endes des biegbaren Führungsrohrs (38),
Positionierung des Gehäuses (26) innerhalb der Hauptrohrleitung (42) solchermassen, dass die zweite Öffnung (32) Seite an Seite mit der Abzweigrohrleitung (44) positioniert ist,
Befestigung des Randteils (14) an der Abzweigstelle der Hauptrohrleitung (42), indem die aufblasbare Ringanordnung (18) unter Druck gesetzt wird,
Umstülpen der Abdichtung (12) solchermassen, dass sich der rohrförmige Teil (16) der Abdichtung (12) und das geschlossene Ende des biegbaren Führungsrohrs (18) in die Abzweigrohrleitung (44) erstrecken, indem unter Druck gesetzte Flüssigkeit von der ersten Öffnung des Gehäuses (26) in Richtung der zweiten Öffnung des Gehäuses (26) verwendet wird,
Positionierung der mobilen Strahlungsenergiequelle (52) innerhalb des rohrförmigen Teils (16),
Ausstrahlen von Strahlungsenergie von der integrierten Strahlungsenergiequelle (22) zum Härten des Randteils (14) und
Ausstrahlen von Strahlungsenergie von der mobilen Strahlungsenergiequelle (52) zum Härten des rohrförmigen Teils (16).

2. Verfahren gemäss Anspruch 1, bei welchem das Gehäuse (26) einen Führungsflansch (34) enthält, um eine geschmeidige Kommunikation zwischen der ersten Öffnung und der zweiten Öffnung (32) zu erlauben

3. Verfahren gemäss einem jeglichen der vorhergehenden Ansprüche, beim welchem die Aussenwand des Gehäuses (26) vorzugsweise eine Netzstruktur oder alternativ eine Rahmenstruktur umfasst

4. Verfahren gemäss einem jeglichen der vorhergehenden Ansprüche, beim welchem die aufblasbare Ringanordnung (18) eine fortlaufende Struktur oder alternativ eine unterteilte Struktur umfasst.

5. Verfahren gemäss einem jeglichen der vorhergehenden Ansprüche, beim welchem die aufblasbare Ringanordnung (18) das Gehäuse (26) umgibt.

6. Verfahren gemäss einem jeglichen der vorhergehenden Ansprüche, beim welchem die aufblasbare Ringanordnung (18) zwei Schichten umfasst

7. Verfahren gemäss einem jeglichen der vorhergehenden Ansprüche, beim welchem die aufblasbare Ringanordnung (18) mit einer Befestigungsabdichtung (12) abdichtend am Gehäuse (26) befestigt wird

8. Verfahren gemäss einem jeglichen der vorhergehenden Ansprüche, beim welchem die integrierte Strahlungsenergiequelle (22) und/oder die mobile Strahlungsenergiequelle (52) eine LED umfasst

9. Verfahren gemäss einem jeglichen der vorhergehenden Ansprüche, beim welchem die integrierten Strahlungsenergiequellen (22) in einer vertieften Lage im Verhältnis zum Aussenumfang des Gehäuses (26) montiert sind.

10. Verfahren gemäss einem jeglichen der vorhergehenden Ansprüche, beim welchem das Gehäuse (26) mit einem Robot, der das Gehäuse (26) greift, innnerhalb der Hauptrohrleitung (42) transportiert wird, oder alternativ mit einem Seil, einem Kabel oder einer Kette, die an dem Gehäuse (26) befestigt sind, oder alternativ mit einem an dem Gehäuse (26) befestigten Motor

11. Verfahren gemäss einem jeglichen der vorhergehenden Ansprüche, beim welchem das Gehäuse (26) eine Digitalkamera und eine Kommunikationsvorrichtung enthält

12. Verfahren gemäss einem jeglichen der vorhergehenden Ansprüche, beim welchem das Führungsrohr (36) aus verstärktem Polymerwerkstoff hergestellt ist.

**13.** Verfahren gemäss einem jeglichen der vorhergehenden Ansprüche, beim welchem die mobile Strahlungsenergiequelle (52) ein Seil, ein Kabel oder eine Kette zum Transport der mobilen Strahlungsenergiequelle (52) innerhalb der Hauptrohrleitung (42) und der Abzweigrohrleitung (44) enthält, oder die mobile Strahlungsenergiequelle (52) alternativ auf einer biegbaren Stange montiert ist, um die mobile Strahlungsenergiequelle (52) innerhalb der Hauptrohrleitung (42) und der Abzweigrohrleitung (44) zu transportieren, oder die mobile Strahlungsenergiequelle (52) alternativ einen Motor und eine Fernsteuerungsvorrichtung enthält, um die mobile Strahlungsenergiequelle (52) innerhalb der Hauptrohrleitung (42) und der Abzweigrahrleitung (44) zu transportieren, oder die mobile Strahlungsenergiequelle (52) alternativ über einen Aktuator an dem Gehäuse (26) montiert ist

**14.** Verfahren gemäss Anspruch 13, bei welchem das Seil über einen Flaschenzug (50) mit dem geschlossenen Ende des biegbaren Führungsrohrs (38) in Verbindung steht

**15.** Verfahren gemäss einem jeglichen der vorhergehenden Ansprüche, bei welchem ferner ein Kompressor und/oder eine Vakuumpumpe zum Aufblasen und/oder Entleeren des biegbaren Führungsrohrs (38) und/oder der aufblasbaren Ringanordnung (18) bereitgestellt wird.

**16.** Verfahren gemäss einem jeglichen der vorhergehenden Ansprüche, beim welchem der Durchmesser des rohrförmigen Teils (16) der Abdichtung (12) etwas kleiner als der Durchmesser der Abzweigrohrleitung (44) ist.

**17.** Verfahren gemäss einem jeglichen der vorhergehenden Ansprüche, beim welchem der Randteil (14) gewellt ist, und wo die Wellung etwa der Wellung der Hauptrohrleitung (42) entspricht

**18.** Verfahren gemäss einem jeglichen der vorhergehenden Ansprüche, welches Verfahren ferner Schritte zur Positionierung einer Auskleidung in der Hauptrohrleitung (42) und dem Schneiden eines Lochs in der Auskleidung umfasst, um die Abzweigrohrleitung (44) vor Ausführung der Schritte gemäss Anspruch 1 oder alternativ nach Ausführung der Schritte gemäss Anspruch 1 zugänglich zu machen

**19.** Verfahren gemäss einem jeglichen der vorhergehenden Ansprüche, welches Verfahren ferner Schritte zur Positionierung einer Auskleidung in der Abzweigrohrleitung (44) vor Ausführung der Schritte gemäss Anspruch 1 oder alternativ nach Ausführung der Schritte gemäss Anspruch 1 umfasst.

**20.** Verfahren gemäss einem jeglichen der vorhergehenden Ansprüche, beim welchem das längliche Gehäuse (26) einen Innenkanal (54) mit einem im Verhältnis zum Innendiameter des länglichen Gehäuses (26) kleineren Aussendiameter umfasst, welcher Innenkanal einen an der ersten Öffnung beliegenden ersten Durchlass (56) und einen an der zweiten Öffnung (32) beliegenden zweiten Durchlass (58) aufweist, und wo das biegbare Führungsrohr (38) am ersten Durchlass (56) befestigt ist und die aufblasbare Ringanordnung (18) am zweiten Durchlass (58)

**21.** Verfahren gemäss einem jeglichen der vorhergehenden Ansprüche, beim welchem die integrierte Strahlungsenergiequelle (22) am Gehäuse (26) befestigt ist.

**22.** System zum Anbringen einer mit Harz imprägnierten Abdichtung (12) auf einer Anschlussstelle zwischen einer Abzweigrohrleitung (44) und einer Hauptrohrleitung (42), welche Abdichtung (12) einen rohrförmigen Teil (16) umfasst, der eine erste Öffnung und eine der ersten Öffnung gegenüberliegende zweite Öffnung definiert, und einen an der ersten Öffnung des rohrförmigen Teils (16) befestigten Randteil (14), der sich vom rohrförmigen Teil (16) radial nach aussen erstreckt, welches System einen Abdichtungsapparat (10) umfasst, enthaltend
ein längliches Gehäuse (26), welches Gehäuse (26) eine Aussenwand aufweist und ein erstes Ende (28) und ein gegenüberliegendes zweites Ende (30) definiert sowie eine longitudinale Ausdehnung zwischen dem ersten und zweiten Ende, die grösser als der Durchmesser der Abzweigrohrleitung (44) ist, welches Gehäuse (26) rechtwinklig zur longitudinalen Ausdehnung eine maximale transversale Ausdehnung aufweist, die kleiner als der Durchmesser der Hauptrohrleitung (42) ist, welches Gehäuse (26) am ersten Ende (28) eine erste Öffnung durch die Aussenwand und eine zwischen dem ersten Ende (28) und dem zweiten Ende (30) beliegenden zweite Öffnung (32) durch die Aussenwand aufweist,
eine aufblasbare Ringanordnung (18), die an der zweiten Öffnung (32) aussen an der Aussenwand befestigt wird und den Umfang der zweiten Öffnung (32) umrandet sowie eine integrierte Strahlungsenergiequelle (22) aufweist zur Erzeugung und Ausstrahlung von Strahlungsenergie von der Ringanordnung (18) nach aussen,
ein biegbares Führungsrohr (38) von grösserer Länge als der rohrförmige Teil (16), welches Führungsrohr (38) ein offenes Ende und ein dem offenen Ende gegenüberliegendes geschlossenes Ende aufweist, welches offene Ende an der ersten Öffnung des Gehäuses (26) befestigt wird,

eine mobile Strahlungsenergiequelle (52) zum Einführen in die zweite Öffnung (32) zur Erzeugung und Ausstrahlung von Strahlungsenergie nach aussen

**Revendications**

1. Procédé d'application d'un joint d'étanchéité imprégné de résine (12) sur une jonction entre un tuyau d'embranchement (44) et une canalisation principale (42), ledit joint d'étanchéité (12) comprenant une partie tubulaire (16) définissant une première ouverture et une deuxième ouverture à l'opposé de ladite première ouverture et une partie de rebord (14) attachée à ladite partie tubulaire (16) à ladite première ouverture et s'étendant radialement vers l'extérieure à partir de ladite partie tubulaire (16), ledit procédé comprenant:

   la fourniture d'un appareil d'étanchéité (10) incluant:

      un boîtier élongé (26), ledit boîtier (26) ayant une paroi extérieure et définissant une première extrémité (28) et une deuxième extrémité opposée (30) et une dimension longitudinale entre lesdites première et deuxième extrémités qui est plus grande que le diamètre dudit tuyau d'embranchement (44), ledit boîtier (26) définissant une dimension transversale maximale étant perpendiculaire à ladite dimension longitudinale inférieure au diamètre de ladite canalisation principale (42), ledit boîtier (26) ayant une première ouverture à travers ladite paroi extérieure à ladite première extrémité (28) et une deuxième ouverture (32) à travers ladite paroi extérieure localisée entre ladite première extrémité (28) et ladite deuxième extrémité (30),
      une structure d'anneau gonflable (18) fixée extérieurement sur ladite paroi extérieure à ladite deuxième ouverture (32) et encerclant de manière circonférentielle ladite deuxième ouverture (32) et ayant une source d'énergie radiante intégrale (22) pour la génération et l'irradiation de l'énergie radiante vers l'extérieure à partir de ladite structure d'anneau (18),
      un tube de guidage (38) ayant une longueur supérieure à ladite partie tubulaire (16), ledit tube de guidage (38) ayant une extrémité ouverte et une extrémité fermée à l'opposé de ladite extrémité ouverte, ladite extrémité ouverte étant fixée à ladite première ouverture dudit boîtier (26), et
      une source d'énergie radiante mobile (52) pour l'insertion à l'intérieur de ladite deuxième ouverture (32) pour la génération et l'irradiation de l'énergie radiante vers l'extérieure, et

   en performant les étapes suivantes:

      positionnant ledit tube de guidage (38) de manière à ce que ladite extrémité fermée est localisée à l'extérieur dudit boîtier (26),
      positionnant ladite partie de rebord (14) dudit joint d'étanchéité (12) juxtaposé ladite structure d'anneau gonflable (18) et ayant ladite partie tubulaire (16) qui s'étend à travers ladite structure d'anneau gonflable (18) et ladite deuxième ouverture (32) dudit boîtier (26) et vers ladite première ouverture dudit boîtier (26) et ladite extrémité fermée dudit tube de guidage (38),
      positionnant ledit boîtier (26) à l'intérieur de ladite canalisation principale (42) de manière à ce que ladite deuxième ouverture (32) est positionnée juxtaposée ledit tuyau d'embranchement (44),
      fixant ladite partie de rebord (14) à ladite canalisation principale (42) et ladite jonction en pressurisant ladite structure d'anneau gonflable (18),
      inversant ledit joint d'étanchéité (12) de manière à ce que ladite partie tubulaire (16) dudit joint d'étanchéité (12) et ladite extrémité fermée dudit tube de guidage souple (38) s'étendent à l'intérieur dudit tuyau d'embranchement (44) par l'application de fluide pressurisé à partir de ladite première ouverture dudit boîtier (26) vers ladite deuxième ouverture dudit boîtier (26),
      positionnant ladite source d'énergie radiante mobile (52) à l'intérieure de ladite partie tubulaire (16),
      irradiant de l'énergie radiante à partir de ladite source d'énergie radiante intégrée (22) afin de durcir ladite partie de rebord (14) et
      irradiant de l'énergie radiante à partir de ladite source d'énergie radiante mobile (52) afin de durcir ladite partie tubulaire (16),

2. Procédé selon la revendication 1, dans lequel ledit boîtier (26) inclut une bride de guidage (34) pour permettre une communication lisse entre ladite première ouverture et ladite deuxième ouverture (32).

3. Procédé selon l'une quelconque des revendications précédentes, dans lequel ladite paroi extérieure dudit boîtier (26) comprend de préférence une structure de maille ou alternativement une structure de cadre.

4. Procédé selon l'une quelconque des revendications précédentes, dans lequel ladite structure d'anneau gonflable (18) comprend une structure continue ou alternativement une structure sectionnée.

5. Procédé selon l'une quelconque des revendications précédentes, dans lequel ladite structure d'anneau gonflable (18) entoure ledit boîtier (26).

6. Procédé selon l'une quelconque des revendications précédentes, dans lequel ladite structure d'anneau gonflable (18) comprend 2 couches.

7. Procédé selon l'une quelconque des revendications précédentes, dans lequel ladite structure d'anneau gonflable (18) est jointe audit boîtier (26) par un joint de fixation (12).

8. Procédé selon l'une quelconque des revendications précédentes, dans lequel ladite source d'énergie radiante intégrée (22) et/ou ladite source d'énergie radiante mobile (52) comprend un DEL.

9. Procédé selon l'une quelconque des revendications précédentes, dans lequel lesdites sources d'énergie radiantes intégrées (22) sont montées dans une position fraisée par rapport à la circonférence extérieure dudit boîtier (26).

10. Procédé selon l'une quelconque des revendications précédentes, dans lequel ledit boîtier (26) est transporté à l'intérieur de ladite canalisation principale (42) par un robot qui saisit ledit boîtier (26), ou alternativement par une corde, un câble ou une chaîne attaché audit boîtier (26), ou alternativement par un moteur attaché audit boîtier (26).

11. Procédé selon l'une quelconque des revendications précédentes, dans lequel ledit boîtier (26) inclut une caméra numérique et un dispositif de communication

12. Procédé selon l'une quelconque des revendications précédentes, dans lequel ledit tube de guidage (38) est fait à partir de matière polymère renforcée.

13. Procédé selon l'une quelconque des revendications précédentes, dans lequel ladite source d'énergie radiante mobile (52) inclut une corde, un câble ou une chaîne pour transporter ladite source d'énergie radiante mobile (52) à l'intérieur de ladite canalisation principale (42) et ledit tuyau d'embranchement (44), ou alternativement ladite source d'énergie radiante mobile (52) est montée à une tige souple pour la transportation de ladite source d'énergie radiante mobile (52) à l'intérieur de ladite canalisation principale (42) et ledit tuyau d'embranchement (44), ou alternativement ladite source d'énergie radiante mobile (52) inclut un moteur et un dispositif de télécommande pour la transportation de ladite source d'énergie radiante mobile (52) à l'intérieur de ladite canalisation principale (42) et ledit tuyau d'embranchement (44), ou alternativement ladite source d'énergie radiante mobile (52) est montée par un actionneur sur ledit boitier (26).

14. Procédé selon la revendication 13, dans lequel ladite corde communique avec ladite extrémité fermée dudit tube de guidage (38) par une poulie (50).

15. Procédé selon l'une quelconque des revendications précédentes, fournissant en outre un compresseur et/ou une pompe à vide pour gonfler ou dégonfler ledit tube de guidage souple (38) et/ou ladite structure d'anneau gonflable (18).

16. Procédé selon l'une quelconque des revendications précédentes, dans lequel ladite partie tubulaire (16) du joint d'étanchéité (12) a un diamètre légèrement inférieur au diamètre du tuyau d'embranchement (44).

17. Procédé selon l'une quelconque des revendications précédentes, dans lequel ladite partie de rebord (14) est ondulée et où ladite ondulation correspond environ à l'ondulation de ladite canalisation principale (42).

18. Procédé selon l'une quelconque des revendications précédentes, comprenant en outre les étapes de positionner un revêtement dans ladite canalisation principale (42) et de couper un trou dans ledit revêtement pour accéder audit tuyau d'embranchement (44) avant d'effectuer les étapes selon la revendication 1, ou alternativement après avoir effectué les étapes selon la revendication 1.

19. Procédé selon l'une quelconque des revendications précédentes, comprenant en outre les étapes de positionner un revêtement dans ledit tuyau d'embranchement (44) avant d'effectuer les étapes selon la revendication 1, ou alternativement après avoir effectué les étapes selon la revendication 1.

20. Procédé selon l'une quelconque des revendications précédentes, dans lequel ledit boîtier élongé (26) comprend un conduit intérieur (54) ayant un diamètre extérieur inférieur au diamètre intérieur dudit boîtier élongé (26), ledit conduit intérieur (54) ayant un premier orifice (56) localisé à ladite première ouverture et un deuxième orifice (58) localisé à ladite deuxième ouverture (32) et où ledit tube de guidage souple (38) est fixé audit orifice (56) et ladite structure d'anneau gonflable (18) est fixée audit deuxième orifice (58).

21. Procédé selon l'une quelconque des revendications précédentes, dans lequel ladite source d'énergie radiante intégrale (22) est fixée audit boîtier (26).

22. Système d'application d'un joint d'étanchéité imprégné de résine (12) sur une jonction entre un tuyau d'embranchement (44) et une canalisation principale (42), ledit joint d'étanchéité (12) comprenant une partie tubulaire (16) définissant une première ouverture et une deuxième ouverture à l'opposé de ladite première ouverture et une partie de rebord (14) attachée à ladite partie tubulaire (16) à ladite première ouverture et s'étendant radialement vers l'extérieure à partir de ladite partie tubulaire (16), ledit système comprenant un appareil d'étanchéité (10) incluant:

un boîtier élongé (26), ledit boîtier (26) ayant une paroi extérieure et définissant une première extrémité (28) et une deuxième extrémité opposée (30) et une dimension longitudinale entre lesdites première et deuxième extrémités qui est plus grande que le diamètre dudit tuyau d'embranchement (44), ledit boîtier (26) définissant une dimension transversale maximale étant perpendiculaire à ladite dimension longitudinale étant inférieure au diamètre de ladite canalisation principale (42), ledit boitier (26) ayant une première ouverture à travers ladite paroi extérieure à ladite première extrémité (28) et une deuxième ouverture (32) à travers ladite paroi extérieure localisée entre ladite première extrémité (28) et ladite deuxième extrémité (30),
une structure d'anneau gonflable (18) fixée extérieurement sur ladite paroi à ladite deuxième ouverture (32) et encerclant de manière circonférentielle ladite deuxième ouverture (32) et ayant une source d'énergie radiante intégrale (22) pour la génération et l'irradiation de l'énergie radiante vers l'extérieure à partir de ladite structure d'anneau (18),
un tube de guidage souple (38) ayant une longueur supérieure à ladite partie tubulaire (16), ledit tube de guidage (38) ayant une extrémité ouverte et une extrémité fermée à l'opposé de ladite extrémité ouverte, ladite extrémité ouverte étant fixée à ladite première ouverture dudit boitier (26),
une source d'énergie radiante mobile (52) pour insertion à l'intérieur de ladite deuxième ouverture (32) pour la génération et l'irradiation de l'énergie radiante vers l'extérieure.

FIG 1

FIG 2A

FIG 2B

FIG 2C

FIG 2D

FIG 2E

FIG 2F

FIG 3

FIG 4

FIG 5

FIG 6

**EP 2 208 920 B1**

REFERENCES CITED IN THE DESCRIPTION

**Patent documents cited in the description**

- DK 2008000073
- WO 2008101499 A
- US 6029726 A